# EUROPÄISCHE PATENTSCHRIFT

(11) **EP 1 588 224 B1**
(45) Veröffentlichungstag und Bekanntmachung des Hinweises auf die Patenterteilung: **05.03.2008**
(21) Anmeldenummer: 04705822.7
(22) Anmeldetag: 28.01.2004
(51) Int. Cl.: G05B 19/42, G05B 19/18

(54) **VERFAHREN UND VORRICHTUNG ZUR HERSTELLUNG VON SERVICESCHAUFELN**
METHOD AND DEVICE FOR PRODUCING SERVICE BLADES
PROCEDE ET DISPOSITIF DE FABRICATION D'AUBES DE SERVICE

(30) Priorität: 31.01.2003 CH 3013903
(43) Veröffentlichungstag der Anmeldung: 26.10.2005
(73) Patentinhaber: Alstom Technology Ltd, 5400 Baden (CH)
(72) Erfinder: BOEHM, Hans, Volker, 66424 Homburg/Saar (DE); HARR, Volker, Dietmar, CH-67346 Speyer (CH); SCHERER, Josef, 60529 Frankfurt (DE)
(86) Internationale Anmeldenummer: PCT/EP2004/050047
(87) Internationale Veröffentlichungsnummer: WO 2004/072748

(56) Entgegenhaltungen:
- EP-A- 0 827 807
- GB-A- 2 350 809
- US-A- 5 285 572
- PATENT ABSTRACTS OF JAPAN Bd. 0124, Nr. 78 (M-775), 14. Dezember 1988 (1988-12-14) & JP 63 200937 A (KAWASAKI HEAVY IND LTD), 19. August 1988 (1988-08-19)
- PATENT ABSTRACTS OF JAPAN Bd. 010, Nr. 295 (M-523), 7. Oktober 1986 (1986-10-07) & JP 61 109646 A (HITACHI SEIKI CO LTD), 28. Mai 1986 (1986-05-28)

## Beschreibung

### TECHNISCHES GEBIET

Die vorliegende Erfindung betrifft ein Verfahren zur Rundum-Bearbeitung eines Rohlings mit einer Bearbeitungsmaschine wie beispielsweise einer Fräsmaschine, wobei die Rundum-Bearbeitung nach Massgabe einer dreidimensionalen Vorlage geschieht. Zudem betrifft die vorliegende Erfindung eine Vorrichtung zur Durchführung eines derartigen Verfahrens.

### STAND DER TECHNIK

Im Bereich der Herstellung von Turbinenschaufeln wird üblicherweise mit einer Mehrspindelbearbeitung gearbeitet. Dies bedeutet, dass ein Rohling zunächst einer groben Vorbearbeitung unterzogen wird, anschliessend der Blattbereich im Detail ausgearbeitet wird, dann der Kopf und zuletzt der Fuss gefertigt wird. Zwischen diesen einzelnen Bearbeitungsschritten muss das Werkstück jeweils von Hand oder durch einen Roboter umgespannt werden, dies weil sowohl häufig die Fräsmaschinen nur in der Lage sind einzelne Bearbeitungsschritte durchzuführen, und insbesondere weil jede Fassung respektive Halterung des Werkstückes immer nur die Bearbeitung eines bestimmten Bereichs erlaubt. Diese Art der Fertigung wird üblicherweise als sogenannte " Kistenfertigung " bezeichnet, da üblicherweise jeweils eine Maschine für einen bestimmten Bearbeitungsschritt verantwortlich zeichnet, und weil nach jedem Bearbeitungsschritt das Werkstück in einer Kiste zwischengelagert wird.

Problematisch an einer derartigen Fertigung ist unter anderem die Tatsache, dass die Geschwindigkeit einer solchen Fertigungsstrasse stets von der Geschwindigkeit des langsamsten Bearbeitungsschrittes bestimmt wird. Ausserdem erfordert die Vielzahl von Transferprozessen von Werkstücken zwischen den einzelnen Einheiten wie Fräsmaschinen, Messstation, Waschstationen etc. aufwändige Einrichtungen und führt zu erheblichen Zeitverlusten im Herstellungsprozess.

Die Problematik wird verschärft, wenn es darum geht, im Rahmen von Servicehandlungen an einer Gasturbine oder Dampfturbine beispielsweise Laufschaufeln oder Leitschaufeln, welche nicht aus der eigenen Produktion stammen, zu ersetzen. Die Fertigung von solchen Einzelstücken, respektive Kleinserien, zu welchen keine entsprechenden Zeichnungen respektive elektronische Daten zur Verfügung stehen, ist äusserst aufwändig und entsprechend kostenintensiv. Das alte Konzept, Serviceschaufeln auf alten, meist abgeschriebenen Maschinen in Niedriglohnländern herzustellen ist nicht mehr Marktgerecht, weil
- die Reaktionszeit für ein Angebot zu lang ist,
- die Lieferzeiten z.B. für USA viel zu lang sind (heute 14-18 Wochen)
- nicht sichergestellt ist, dass der Kunde eine optimale Schaufel erhält (Wirkungsgradoptimiert oder-kontrolliert)
- die Herstellkosten aufgrund der alten Produktionstechnik zu hoch sind

### DARSTELLUNG DER ERFINDUNG

Die GB-A-2350809 offenbart ein Verfahren zur Reparatur von Turbinenschaufeln oder zur Ergänzung von teilbearbeiteten Schaufeln. Im Dokument wird beschrieben, dass die Schaufel, welche stets bei der Bearbeitung auf einer Seite eingespannt ist, auf Basis eines Modells repariert wird. Dieses Modell kann erhalten werden entweder unter Zuhilfenahme von bereits vorhandenen CAD/CAM Daten, oder unter Zuhilfenahme des Ausmessens eines typischen Beispiels einer neuen fertig gestellten Komponente, oder unter Zuhilfenahme eines Ausmessens des eines Teils einer Komponente unter anschliessender Rekonstruktion, des Restes.

Die JP 63200937 beschreibt ein Verfahren, bei welchem unter Zuhilfenahme einer Mehrachsenmaschine aus einem zylindrischen Werkstück eine in der Mitte und am Ende strukturierte Welle für eine Maschine hergestellt wird. Dabei wird das zylindrische Werkstück zunächst auf zwei Seiten gegriffen, und der freiliegende Umfangsbereich bearbeitet. Anschliessend wird eine Wiege zugeführt, welche die im mittleren Bereich im ersten Schritt bearbeitete Welle umgreift, und dann wird am nun freiliegenden Ende der Welle eine Bohrung vorgenommen.

Der Erfindung liegt demnach die Aufgabe zugrunde, ein Verfahren zur Verfügung zu stellen, welches die eingangs genannten Nachteile des Standes der Technik zu beheben vermag. Es geht dabei ganz allgemein um ein Verfahren zur Rundum-Bearbeitung eines Rohlings mit einer Bearbeitungsmaschine wie beispielsweise einer Fräsmaschine, wobei die Rundum-Bearbeitung nach Massgabe einer dreidimensionalen Vorlage geschieht

Die Lösung dieser Aufgabe wird dadurch erreicht, dass in einem ersten Schritt die Raumform und gegebenenfalls zudem die Oberflächenbeschaffung der dreidimensionalen Vorlage automatisch vermessen wird, und die zugehörigen Daten abgespeichert werden. Anschliessend wird in einem zweiten Schritt ein Rohling, wobei es sich dabei um einen Rohling aus Metall oder aus einem Keramikwerkstoff handeln kann, und der Rohling rechteckige oder zylindrische oder polyeder-förmige insbesondere quaderförmige Form haben kann und ein Guss- oder Schmiederohling sein kann, von wenigstens einem Spannadapter gehalten und von der Bearbeitungsmaschine respektive der Fräsmaschine unter Verwendung der genannten Daten zur numerischen Steuerung bearbeitet. Dabei wird ein erster Bereich in seine endgültige, der bestimmungsgemässen Verwendung entsprechende Teilform gebracht. In einem nachfolgenden dritten Schritt wird der teilbearbeitete Rohling von wenigstens einem Spannadapter im ersten, endgültig bearbeiteten Bereich gehalten und der übrige Bereich insbesondere bevorzugt von derselben Bearbeitungsmaschine respektive Fräsmaschine unter Verwendung der genannten Daten zur numerischen Steuerung in seine endgültige, der bestimmungsgemässen Verwendung entsprechende Gesamtform gebracht.

Der Kern der Erfindung besteht somit darin, auf der einen Seite das Ausmessen des alten Bauteils und die eigentliche Fertigung des Ersatzteils so nahe wie möglich zu halten. Auf der anderen Seite wird durch die Fertigung in nur zwei Aufspannungen, wobei der Transfer von einer ersten Aufspannung in die zweite Aufspannung ohne manuelle Eingriffe geschehen kann, der Automatisierungsgrad erhöht und entsprechend werden Fertigungskosten reduziert. Die üblicherweise im Zusammenhang mit derartigen Kleinserien sehr hohen Kosten können so überraschend niedrig gehalten werden, und ausserdem ergeben sich durch die Fertigung in zwei Aufspannungen unter Verwendung der gleichen Maschine eine erhöhte Genauigkeit der Bauteile und eine Reduktion der zur Verfügung zu stellenden Werkzeuge respektive Maschinen. Typischerweise handelt es sich bei der Vorlage um ein zu ersetzendes Bauteil, insbesondere um ein zu ersetzendes Bauteil einer Gasturbine oder Dampfturbine wie beispielsweise eine Laufschaufel oder Leitschaufel.

Eine erste bevorzugte Ausführungsform des erfindungsgemässen Verfahrens ist dadurch gekennzeichnet, dass die Daten nach deren Erfassung und vor deren Verwendung zur Rundum-Bearbeitung des Rohlings derart verändert werden, dass die dreidimensionale Raumform und gegebenenfalls zudem die Oberflächenbeschaffu*ng der Vorlage entweder optimiert wird, oder wieder auf einen ursprünglichen Zustand der dreidimensionalen Vorlage gebracht wird, indem beispielsweise Verschleisssegmente eliminiert werden. Dieser Schritt, welcher entweder automatisch, manuell, oder manuell unter teilweiser Computerunterstützung geschehen kann, erlaubt es, die Verschleisszonen wieder in ihren ursprünglichen Zustand zu bringen. Ausserdem kann in diesem Schritt eine Optimierung der ehemaligen Form nach neuesten Kenntnissen erfolgen, was es erlaubt, im Rahmen einer Servicedienstleistung nicht nur Bauteile zu ersetzen, sondern diese auch beispielsweise strömungstechnisch oder kühltechnisch gleichzeitig zu optimieren.

Eine weitere bevorzugte Ausführungsform beruht darauf, dass sämtliche Arbeitsschritte des Verfahrens auf einer einzigen Bearbeitungsmaschine respektive Fräsmaschine durchgeführt werden. Die Durchführung des gesamten Verfahrens, d. h. Ausmessen sowie anschliessende Fertigung, auf der gleichen Maschine bedeutet, dass auch typischerweise für die Vorlage und das anschliessend herzustellende Bauteil die gleichen Bedingungen gelten, was die Genauigkeit des herzustellenden Bauteils respektive dessen Übereinstimmung mit der Vorlage erhöht. So werden beispielsweise die gleichen Spannadapter zum Greifen der Vorlage wie auch des anschliessenden Rohlings oder teilbearbeiteten Rohlings verwendet, und entsprechend können die beim Ausmessen ermittelten Daten unmittelbar und im wesentlichen ohne weitere Kalibration oder Anpassung an andere Umgebungsbedingungen verwendet werden. Bei der Bearbeitungsmaschine respektive Fräsmaschine handelt es sich bevorzugt um eine 4-Achsen Tischmaschine mit zusätzlichen ersten Mitteln zur Halterung eines Rohlings in zwei Aufspannungen und mit zweiten Mitteln zur Vermessung der Raumform und gegebenenfalls der Oberflächenbeschaffung einer Vorlage oder des zu bearbeitenden oder (teilweise) bearbeiteten Werkstücks.

Vor der Bearbeitung des Rohlings unter Verwendung der genannten Daten, gegebenenfalls nach einer Veränderung der Daten, wie sie oben beschrieben ist, können gemäss einer anderen bevorzugten Ausführungsform in einer numerischen Steuerung durch die Bearbeitungsmaschine respektive Fräsmaschine Spannbacken zum Spannen resp. Haltern des teilbearbeiteten Rohlings in wenigstens einem Spannadapter im ersten, endgültig bearbeiteten Bereich hergestellt werden. Da für die Herstellung eines Ersatzteils in nur zwei Aufspannungen typischerweise Sonderspannadapter zur Halterung des teilbearbeiteten Rohlings in seinem bereits in seine endgültige, der bestimmungsgemässen Verwendung entsprechende Teilform gebrachten Bereich erforderlich sind, können diese einfacher Weise für die Fertigung einer derartigen Kleinserie oder eines Einzelstücks auf Basis der Vermessungsdaten vor der Fertigung des ersten Ersatzteils automatisiert hergestellt werden. So können derartige Spannadapter spezifisch auf die Geometrie der Vorlagen angepasst werden, was eine bessere Halterung der teilbearbeiteten Rohlinge erlaubt und so die Präzision der fertigen Werkstücke sowie die Herstellungsgeschwindigkeit erhöht. Vorzugsweise ist es möglich, die Vorlage mit diesen eigens gefertigten Spannadaptern nochmals zu fassen und den Messvorgang noch mal zu wiederholen. So wird die Übereinstimmung zwischen Vorlage und endgültigem Bauteil weiter erhöht (Übereinstimmung selbstverständlich nur im gewünschten Umfange, d.h. bis auf die zu ergänzenden Verschleisszonen).

Typischerweise wird das Vermessen des Ersatzteils im ersten Schritt, d. h. die Bestimmung der Raumform und gegebenenfalls zudem der Oberfiächenbeschaffung der dreidimensionalen Vorlage und deren numerische Speicherung automatisch unter Verwendung eines Messtasters und/oder eines Streifenscanners durchgeführt. Vorteilhafter Weise wird dafür im ersten Schritt zur Vermessung der Raumform und gegebenenfalls zudem der Oberflächenbeschaffung der dreidimensionalen Vorlage die Vorlage in einer A-Achse, welche auf dem. Maschinentisch vorhanden ist, an deren Enden eingespannt. Anschliessend wird bevorzugt die Vermessung mehrstufig unter Verwendung von unterschiedlichen Rotationspositionen dieser A-Achse durchgeführt, um die Raumform vollständig und gegebenenfalls unter automatische Korrekturen ermöglichender Redundanz durchzuführen. Bevorzugt wird anschliessend die Vorlage in einem zweiten Schritt der Vermessung in ihrem mittleren Bereich über Spannadapter gefasst, und Kopf- sowie Fussbereich der Vorlage in dieser Spannlage vermessen. Selbstverständlich ist es gleichermassen möglich, die Reihenfolge dieser beiden Vermessungsschritte zu vertauschen, d. h. zunächst Kopf- respektive Fusspartie auszumessen und anschliessend den mittleren Bereich.

Handelt es sich bei der Vorlage um grosse Objekte wie beispielsweise um eine zu ersetzende Laufschaufel oder Leitschaufel einer Gasturbine oder Dampfturbine mit z. B. einer Länge im Bereich von mehr als 200mm, müssen bei der Bearbeitung auftretende Hebelkräfte berücksichtigt werden. Entsprechend wird vorteilhafter Weise so vorgegangen, dass im zweiten Schritt ein Rohling in einer A-Achse eines Maschinentisches gefasst wird, indem an wenigstens einem Ende der Rohling über einen Sonderspannadapter gefasst wird und am anderen Ende über einen verfahrbaren Reitstock fixiert wird. Die A-Achse ist vorteilhafter Weise horizontal angeordnet. Anschliessend wird der mittlere Bereich des Rohlings in seine endgültige, der bestimmungsgemässen Verwendung entsprechende Teilform gebracht. Dann wird im dritten Schritt der teilbearbeitete Rohling durch gegebenenfalls eigens für die spezifische Schaufel hergestellte Spannbacken an definierten Spannflächen in einer W-Achse des Maschinetisches gefasst. Die W-Achse ist vorteilhafter Weise vertikal angeordnet. Ausserdem wird typischerweise der teilbearbeitete Rohling in diesem dritten Schritt durch zwei Paare von Spannbacken gefasst. Anschliessend werden Kopfsowie Fussbereich in ihre endgültige, der bestimmungsgemässen Verwendung entsprechende Teilform gebracht.

Handelt es sich alternativ bei der Vorlage um eher kleineren Objekte wie beispielsweise um eine zu ersetzende Laufschaufel oder Leitschaufel einer Gasturbine oder Dampfturbine mit z. B. einer Länge im Bereich von weniger als 200mm kann auch umgekehrt vorgegangen werden. Entsprechend wird im zweiten Schritt der Rohling durch Spannbacken (typischerweise ein Paar) in einer W-Achse des Maschinentisches gefasst, und anschliessend wenigstens ein Kopf- oder Fussbereich in seine endgültige, der bestimmungsgemässen Verwendung entsprechende Teilform gebracht Anfolgend wird im dritten Schritt des Verfahrens der teilbearbeitete Rohling in einer A-Achse eines Maschinentisches gefasst, indem an wenigstens einem bereits in seine endgültige, der bestimmungsgemässen Verwendung entsprechende Teilform gebrachten Ende der Rohling über einen gegebenenfalls eigens für die spezifische Schaufel hergestellten Sonderspannadapter gefasst und optional am anderen Ende über einen verfahrbaren Reitstock fixiert wird. Anschliessend wird der mittlere Bereich sowie gegebenenfalls der verbleibende Kopf- oder Fussbereich in ihre/seine endgültige, der bestimmungsgemässen Verwendung entsprechende Teilform gebracht.

Weitere bevorzugte Ausführungsformen des erfindungsgemässen Verfahrens sind in den abhängigen Ansprüchen beschrieben.

Ausserdem betrifft die vorliegende Erfindung eine Vorrichtung zur Durchführung eines Verfahrens, wie es oben beschrieben wurde. Die Vorrichtung ist im wesentlichen dadurch gekennzeichnet, dass es sich bei der Bearbeitungsmaschine respektive Fräsmaschine um eine 4-Achsen Maschine handelt, auf deren Maschinentisch wenigstens eine A-Achse im wesentlichen horizontaler Ausrichtung zum Spannen eines Werkstücks vorgesehen ist, wobei diese A-Achse durch einen verfahrbaren Reitstock ergänzt wird. Dieser Reitstock ist vorzugsweise auf einem Kreuztisch montiert und kann bevorzugt je nach Grösse der Vorlage respektive des entsprechenden Rohlings in unterschiedlichen Grundstellungen der Reitstockgrundplatte fixiert werden, sodass der Abstand zwischen dem Spannenmechanismus der A-Achse und dem Reitstock den Bedürfnissen entsprechend eingestellt werden kann. Ausserdem ist auf deren Maschinentisch wenigstens eine W-Achse im wesentlichen vertikaler Ausrichtung vorgesehen, welche insbesondere bevorzugt über Spannadapter-Austauschbacken verfügt. Auch die A-Achse verfügt insbesondere bevorzugt über Spannadapter-Austauschbacken, um spezifisch auf zu fertigende Schaufelgeometrien angepasste Mittel zu deren Halterung vorsehen zu können. Eine derartige Vorrichtung kann beispielsweise ausgehend von einer Standard-4-Achsen Maschine in einer Nachrüstung hergestellt werden.

Weitere bevorzugte Ausführungsformen der erfindungsgemässen Vorrichtung finden sich in den abhängigen Ansprüchen beschrieben.

### KURZE ERLÄUTERUNG DER FIGUREN

Die Erfindung soll nachfolgend anhand von Ausfüluungsbeispielen im Zusammenhang mit den Zeichnungen näher erläutert werden. Es zeigen:
- Fig. 1: den Aufbau einer 4-Achsen Tischmaschine (Grundmaschine) nach dem Stand der Technik ;
- Fig. 2: eine ausgebaute 4-Achsen Tischmaschine, a) in einer Frontansicht, b) in einer Seitenansicht ;
- Fig. 3: eine ausgebaute 4-Achsentischmaschine in einer Ansicht gemäss Fig. 2b), wobei ausserdem eine zusätzliche W-Achse auf dem Maschinentisch vorgesehen ist;
- Fig.4: eine Darstellung gemäss Fig. 2b), wobei die Grundstellungen für die Reitstockgrundplatte für unterschiedliche Schaufellängen dargestellt sind ;
- Fig. 5: Spindel für die A-Achse, a) Spindel mit normalem A-Achsen Spannadapter mit austauschbaren Backen, b) Spindel mit überbreitem, verschraubtem Flansch zur Aufnahme von grossen Spannsystemen ;
- Fig. 6: eine Darstellung des ersten Arbeitsschritts, Serviceschaufel Spannen in Sonderspannadapter;
- Fig. 7: eine Darstellung des ersten Arbeitsschritts, Alternative, Serviceschaufel Spannen zwischen Spitzen ;
- Fig. 8: eine Darstellung des zweiten Arbeitsschritts, grobe Funktionsbereichsvermessung mit Messtaster ;
- Fig. 9: eine Darstellung des dritten Arbeitsschritts, Feinscannen mittels eines Streifenscanners in X-Richtung ;
- Fig. 10: eine Darstellung der Arbeitsschritte 4 und 5, Feinscannen mittels eines Streifenscanners unter anderen Winkellagen der Schaufel ;
- Fig. 11: eine Darstellung des sechsten Arbeitsschritts, Grobvermessung des Kopf- und Fussbereichs auf der W-Achse ;
- Fig. 12: Fertigung einer grossen Schaufel, erster Schritt, Spannen des Rechteckrohlings ;
- Fig. 13: Fertigung einer grossen Schaufel, zweiter Schritt, Fräsen des mittleren Bereichs ;
- Fig. 14: Fertigung einer grossen Schaufel, 3. Schritt, Vermessen der Schaufel ;
- Fig. 15: Fertigung einer grossen Schaufel, Spannen der Schaufel auf der W-Achse, a) Ansicht von oben, b) Seitenansicht;
- Fig. 16: Fertigung einer grossen Schaufel, Fertigfräsen der Fuss- und Kopfgeometrie auf der W-Achse ;
- Fig. 17: Fertigung einer kleinen Schaufel, erster Schritt, Spannen des Rechteckrohlings auf der W-Achse ;
- Fig. 18: Fertigung einer kleinen Schaufel, zweiter Schritt, Herstellung der kompletten Fusspartie ;
- Fig. 19: Fertigung einer kleinen Schaufel, 3. Schritt, Spannen der Serviceschaufel in der A-Achse ;
- Fig.20: Fertigung einer kleinen Schaufel, 4. Schritt, Fräsen der Kanal- und Kopfgeometrie ;
- Fig. 21: Fertigung einer kleinen Schaufel, 4. Schritt, Fertigfräsen der Kopfgeometrie ; und
- Fig. 22: Fertigung einer kleinen Schaufel, 5. Schritt, Vermessen der restlichen Schaufelgeometrie.

### WEGE ZUR AUSFÜHRUNG DER ERFINDUNG

### I. Maschinenaufbau

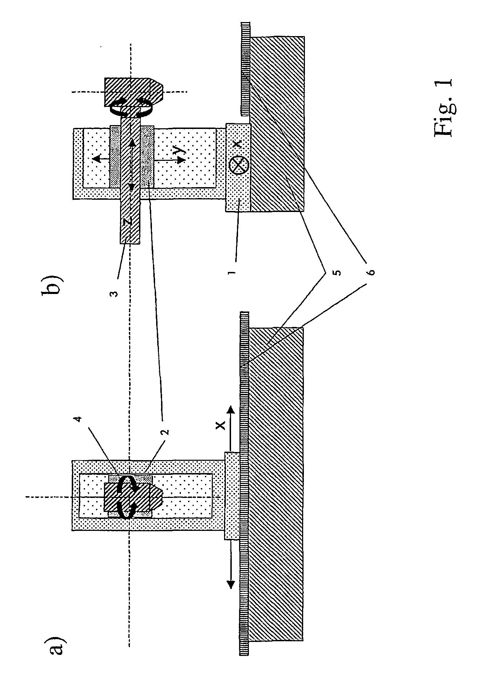

Der Maschinenaufbau bedingt eine sogenannte Doppelplatzmaschine mit integrierter NC-Reitstockspitze. Als Grundmaschine kann eine herkömmliche 4-Achsen Flachbett NC-Maschine eingesetzt werden (z.B. CHIRON, Mill 2000). Eine derartige Maschine ist beispielhaft in Fig. 1 dargestellt. Sie umfasst ein Maschinenbett 5 auf welchem ein Maschinentisch 6 angeordnet ist. Auf dem Maschinenbett 5 ist der bewegliche Aufbau montiert. Der bewegliche Aufbau umfasst einen X-Achsenschlitten 1, welcher eine verschiebliche Beweglichkeit des gesamten Aufbaus in horizontaler Richtung erlaubt. Ausserdem ist ein Y-Achsenschlitten 2 angeordnet, welcher eine verschiebliche Beweglichkeit in vertikaler Richtung erlaubt. Auf diesem Y-Achsenschlitten 2 ist ein Z-Achsenschlitten 3 angeordnet, welcher eine verschiebliche Beweglichkeit in horizontaler Richtung orthogonal zur X-Achse ermöglicht. Auf diesem Z-Achsenschlitten 3 ist die Spindeldrehachse 4 angeordnet, welche eine zusätzliche Rotation des Bearbeitungswerkzeugs um die Z-Achse ermöglicht. Typischerweise wird dabei eine Rotation um +/- 100 Grad ermöglicht.

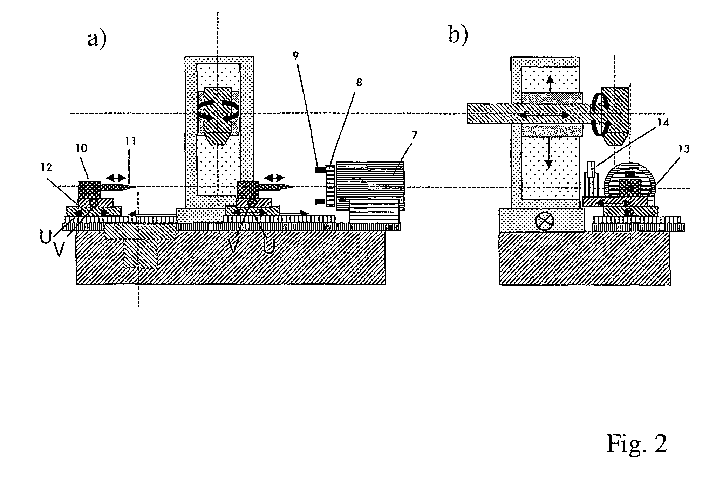

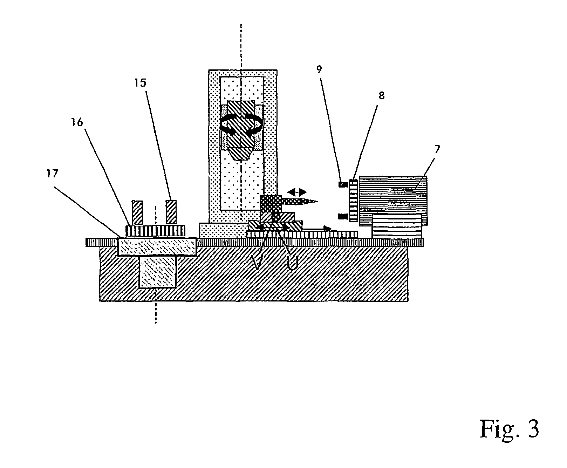

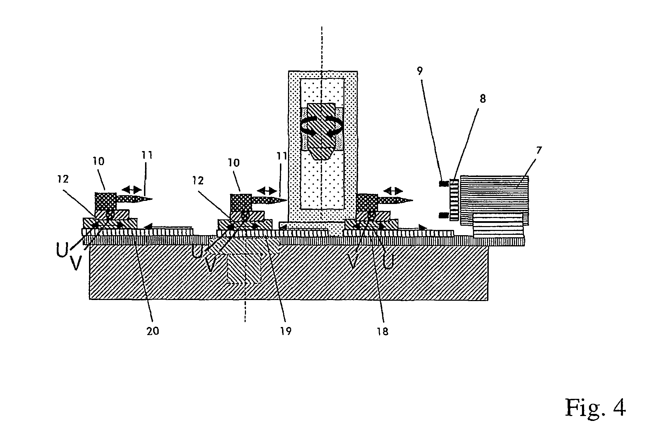

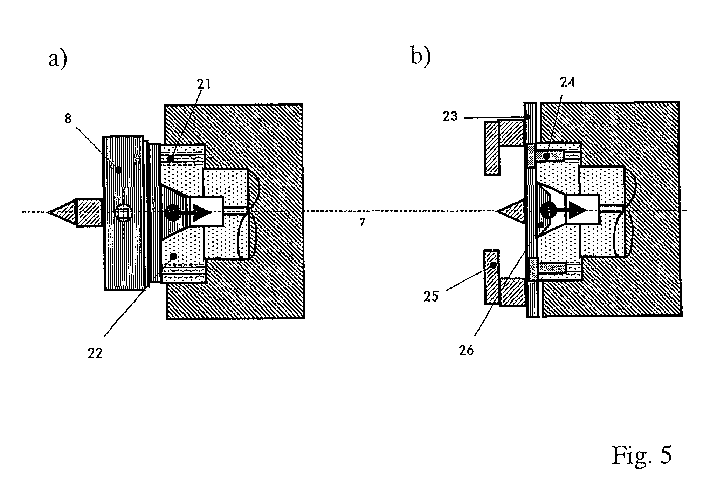

Eine derartige Standard 4-Achsen Flachbett NC-Fräsmaschine (z.B. CHIRON Mill 2000) ist zur automatisierten Serviceschaufelherstellung (Schaufel mit "unbekannter" Geometrie) wie folgt nachzurüsten (vgl. dazu Fig. 2,3,5):
1. Auf einer Flachbett-Tischseite ist eine A-Achse (NC-Rotationsachse) 7 montiert. Die Spindel dieser NC-Rotationsachse ist mit einer Spannschnittstelle 8/22, vorzugsweise HSK 80 mit grosser Plananlage, typischerweise Durchmesser 100mm, auszustatten. In den äusseren Flanschen dieser HSK Spannschnittstelle sind mindestens drei, besser vier Innengewindebohrungen 21 anzubringen. Vgl. dazu Fig. 5. In dieser Spannschnittstelle werden dann, je nach Schaufelgrösse, Standard-Spannadapter 8 mit austauschbaren Spannelementen/Backen aufgenommen. Für das Aufnehmen von grossen Schaufeln wird auf die Spannschnittstelle eine Flanschplatte 23 aufgesteckt und mittels Schrauben 24 in die Innengewindebohrungen 21 fest verschraubt. Auf dieser Flanschplatte kann dann eine grosse Schaufelspannvorrichtung 25 montiert werden.
2. Durch Austausch der Spannadapter 8/25 ist eine Schaufelgrössenanpassung möglich (vorzugsweise drei Varianten).
3. Durch Austausch der Spannelemente/Backen ist eine Anpassung an unterschiedliche Schaufelfussgeometrien inkl. Guss-Geometrien möglich.
4. Vor der A-Achse 7 ist auf einer verschiebbaren, fixierten und gespannten Grundplatte, ein NC-Kreuztisch mit einem NC-Reitstock 10 mit einer Reitstockspitze 11 montiert.
5. Durch Versetzen dieser Grundplatte in definierte Positionen auf der Tischplatte, lassen sich Serviceschaufeln von einer Länge zwischen 5 mm und 1.800mm auf dieser Maschine herstellen. Dies ist beispielhaft in Fig. 2 dargestellt sowie insbesondere in Fig. 4. In Fig. 4 sind 3 verschiedene Grundstellungen der Reitstockgrundplatte dargestellt. Eine erste Position 18, bei welcher kleine Schaufeln mit einer Schaufellänge von 5 bis 500 mm Länge bearbeitet werden können. In einer zweiten, mittleren Position 19 können Schaufeln einer Länge von 500 bis 1000 mm Länge bearbeitet werden, und in der dritten Position 20 können grosse Schaufeln mit einer Länge von im Bereich von 1000 bis 1500 mm Länge ausgemessen respektive anschliessend hergestellt werden.
6. Der NC-Kreuztisch lässt durch seine NC-U-Achse 12 eine beliebige Feinverstellung zwischen den angegebenen definierten Positionen zu, so dass alle Schaufellängen aufnehmbar sind.
7. Auf der NC-Querachse des Kreuztisches (V-Achse, vgl. dazu Fig. 2) ist vorne der NC-Reitstock 10 montiert, mit dem der gespannte Schaufelrohling 38 zur A-Achse 7 fixiert wird. Hinten ist ein Kipphandlingsystem montiert, mit deren Hilfe der Schaufelrohling von der W-Achse 17 in die A-Achsenspannlage oder umgekehrt, gebracht wird. Diese Einheit kann auch durch ein externes Handling durchgeführt werden oder entfallen, wenn diese Funktion manuell durchgeführt wird.
8. Auf/in die rechte Flachbett-Tischplatte wird eine NC-Rundachse integriert (W-Achse 17). Vgl. dazu insbesondere Fig. 3. Auf dieser Rundachse wird ein Standard-Spannelement 16 montiert. Durch Austausch der Spannelemente/Backen 15 können hier sowohl Serviceschaufeln 28 zur Fuss- und/oder Kopf-Anarbeitung, Fertigbearbeitung oder Vermessung als auch Rohlinge 3 (senkrecht oder quer) gespannt werden.
9. Die Maschine muss mit einem zweiten Messsystem für das Messen mit Taster 29, Scanner 30 und Oberflächenqualitätsbestimmung ausgestattet werden.
10. Der (Laser-)Streifenscanner 30 wird wie ein Werkzeug und wie der Messtaster 29 im Werkzeugmagazin der Maschine stationiert. Die Datenübertragung erfolgt über Funk oder eine Infrarotschnittstelle.
11. Bevor eine Messoperation beginnt, wird der Streifenscanner 30 oder Messtaster 21 durch den Werkzeugwechsler in die Frässpindel gewechselt und aktiviert.

### II. Datenerfassung/-gewinnung und Datenaufbereitung von Serviceschaufeln

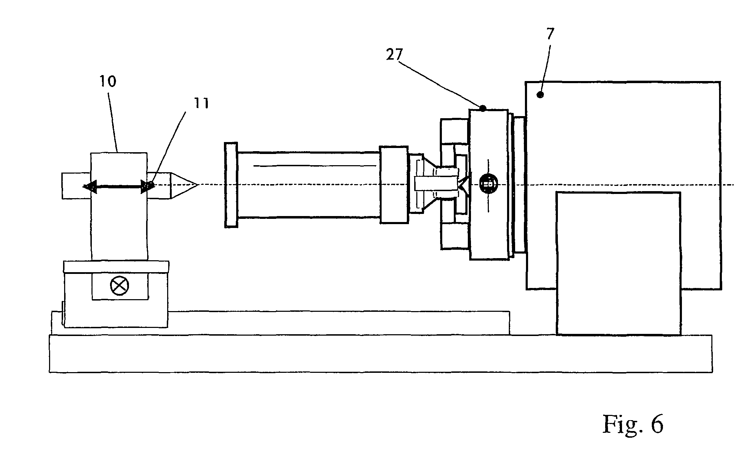

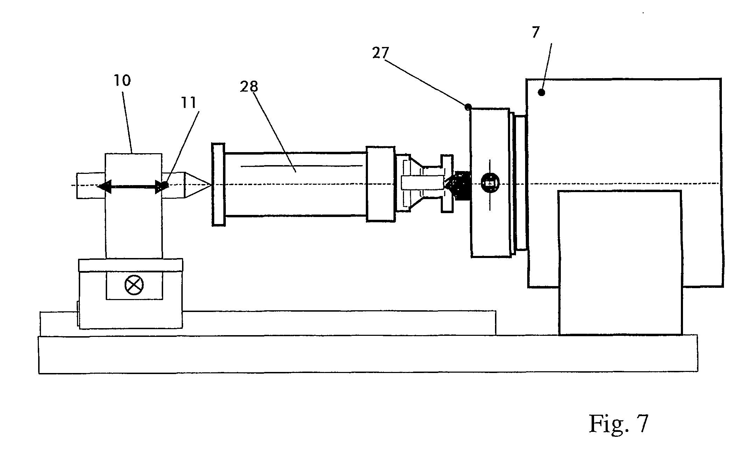

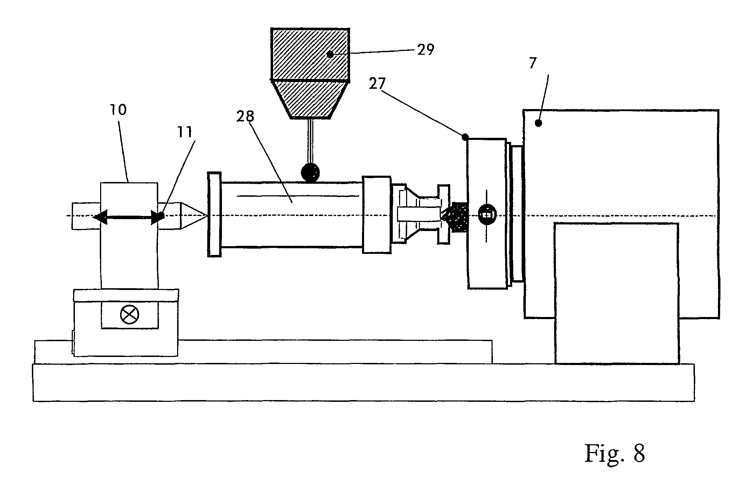

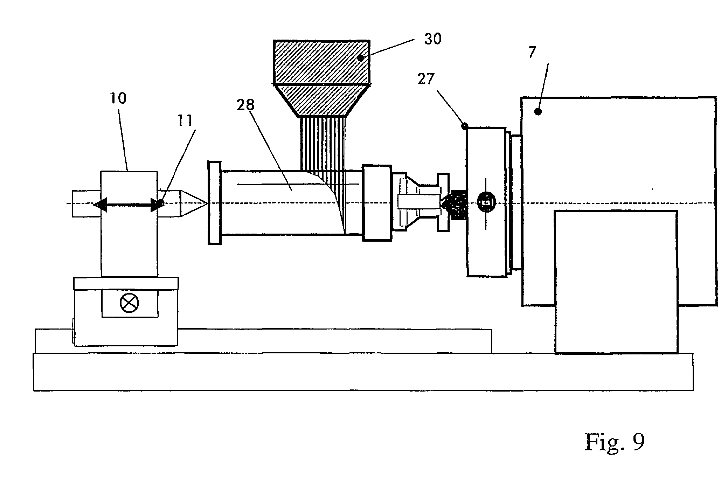

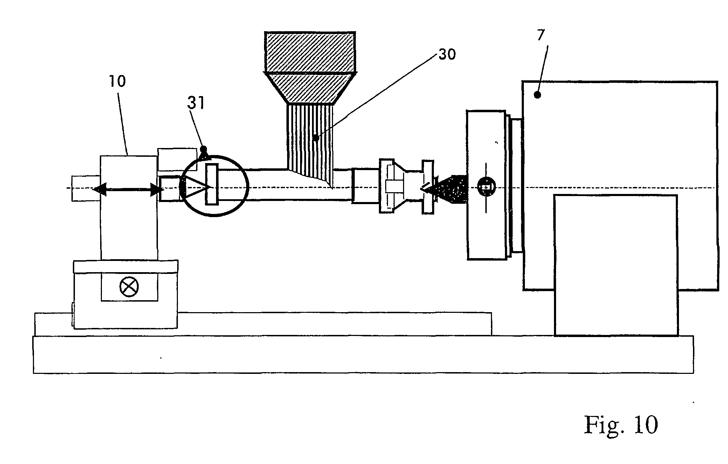

1. Eine Serviceschaufel 28 (mit oder ohne Verschleisssegmente) mit bekannter oder unbekannter Kontur wird zur Vermessung in das A-Achsen-Spannsystem 27 aufgenommen (so in Fig. 6 dargestellt) oder mittels Zentrierspitzen oder Spannzapfen zwischen die A-Achse 7 und den Reitstock 10 gespannt (so in Fig. 7 dargestellt).
2. Anschliessend werden die Funktionsbereichsgrenzen der Schaufel, wie z.B. Kopf-, Fuss- und Blattbereich grob mit einem Messtaster 21 ermittelt (vgl. dazu Fig. 8). Aus diesen Bereichseckdaten werden die Grenzen und die zu wählende Feinmess-Strategie für die Feinvermessung mittels eines Standardstreifenscanners 30 festgelegt. Dieser Punkt kann auch entfallen, wenn eine ähnliche Schaufel im CAD-CAM System bekannt ist.
3. Mittels der ermittelten Bereichsgrenzen und der festgelegten Feinmess-Strategie wird dann die komplette Schaufelgeometrie mittels Standardstreifenscanners 30 in X-Richtung vermessen (vgl. dazu Fig. 9). Der Abstand der Streifenscanebenen ist eine Funktion der benötigten Endgenauigkeit innerhalb der Funktionsbereiche, und liegt zwischen 0,1 mm und 5 mm. Z.B. an Radienübergängen wird feiner gescannt als in den langen Kanalflächen.
4. Nach Beendigung dieser Scanebene wird die Schaufel 28 durch das Drehen der NC-A-Achse 7 in eine andere Winkellage 31 gebracht. Danach wird der Scanprozess Pos. 2. wiederholt (vgl. dazu Fig. 10).

Dieser Scanvorgang wird je nach Genauigkeitsanforderung bis zu 5 mal durchgeführt, wobei 3 mal normal ist (maximale Winkeldrehung 120°. Für feinere Auflösung kleinere Winkelteiler).

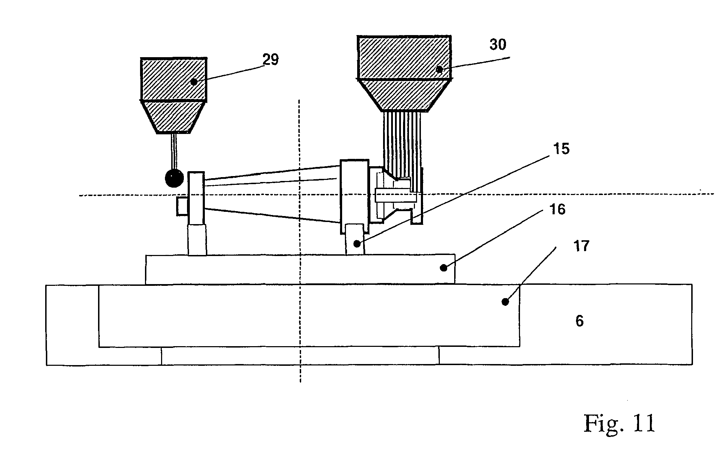

Bei Schaufeln, bei denen man in der Messposition 2-5 die Kopf- und/oder Fusskontur nicht genau ermitteln konnte, werden diese zur exakten Bestimmung der Fuss- und Kopfpartie in eine Hilfsspannvorrichtung auf die W-Achse (Horizontal) gelegt. Vgl. dazu Fig. 11. Anschliessend wird die komplette Fuss- und Kopfgeometrie mittels eines Messtasters 29 grob vermessen und mittels des Standardstreifenscanners 30 fein vermessen. Um die Fusspartie und die Kopfpartie in dieser Aufspannung vermessen zu können, wird die W-Achse um 180° gedreht.

Die Scanmessebenen werden dann in einem CAD-System so aufbereitet, dass die Schaufelgeometrie der alten Serviceschaufel 28 entsteht.

Danach erfolgt dann eine Überarbeitung der Serviceschaufelgeometriedaten, mit dem Ziel alle Verschleisssegmente der Schaufel zu eliminieren. Es entsteht so die Geometrie der Serviceneuschaufel.

Hat man von allen Schaufelreihen einer Turbine deren Daten so ermittelt, kann man auch noch zusätzlich eine Optimierung des Strömungskanals durchführen und die neuen Schaufelgeometriedaten bestimmen.

Für diese so bestimmten Serviceneuschaufeln werden dann die NC-Programme für:
10.1 die Bearbeitung durch Fräs-, Bohr- und Drehfräsen
10.2 Messen der Fertigschaufel
10.3 Herstellung (Fräsen) der Spannelement/Backen-Kontur
10.4 und Schaufelfuss-, Kopffertigbearbeitung erstellt (vgl. dazu Kapitel III weiter unten).

### III. Mechanische Fertigung der Serviceneuschaufeln

Es können die beiden folgenden Arbeitsschritte zur Herstellung einer Serviceneuschaufel unterschieden werden. Beide Abläufe können auf der unter Pos. II.1 beschriebenen Maschine durchgeführt werden.

### III. 1 Fertigungsablauf von kurzen Serviceschaufeln

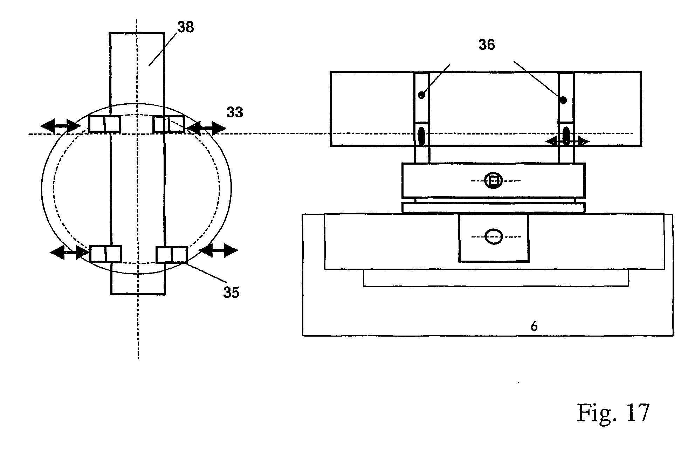

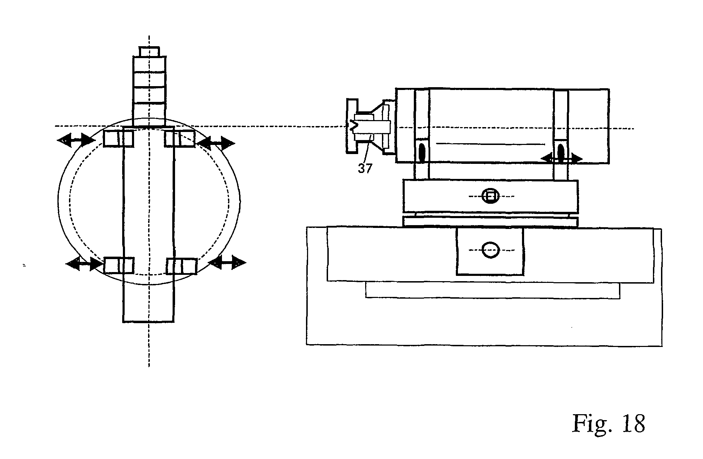

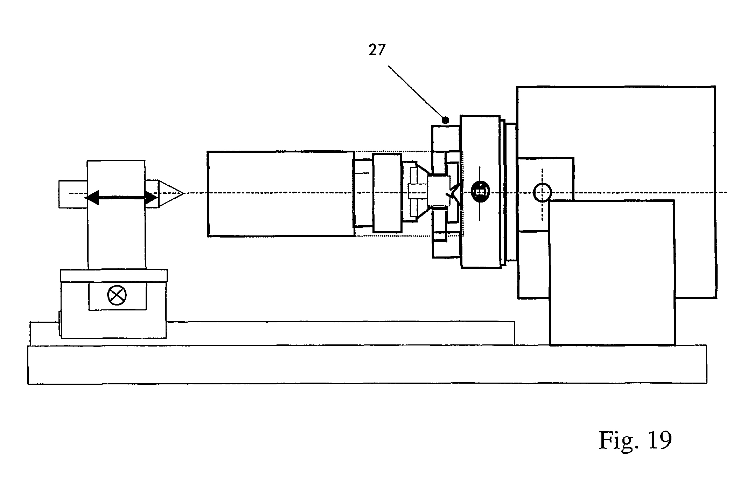

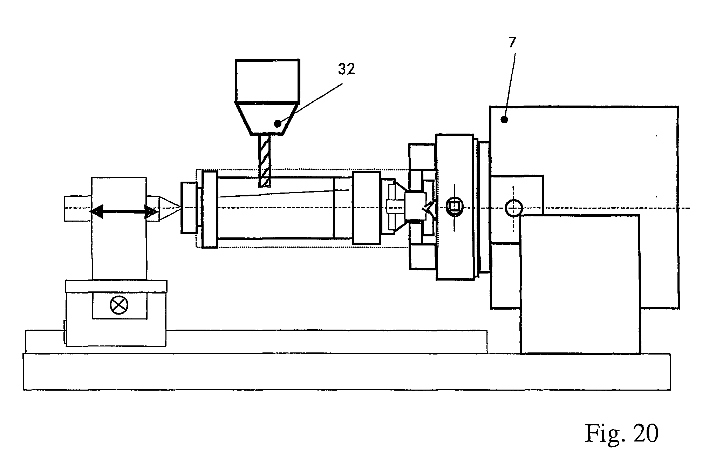

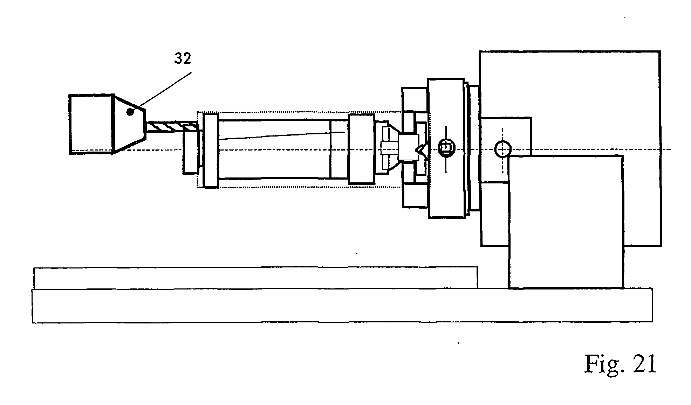

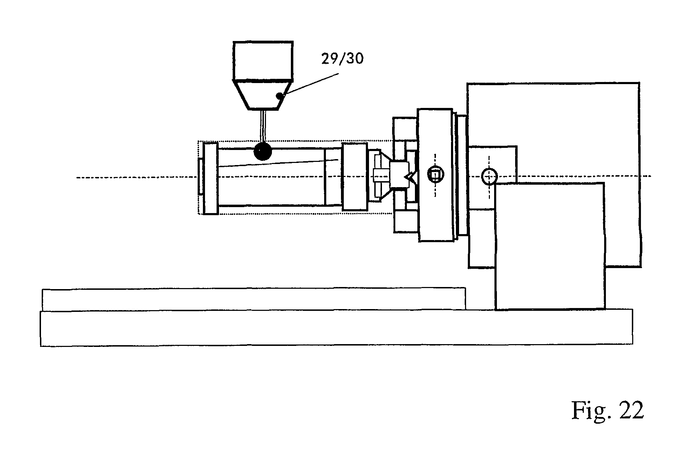

(geeignet für kurze Schaufeln < 200 mm, vgl. dazu Figuren 17-22)
1. Zur Ermittlung der alten Serviceschaufelgeometrie werden die Arbeitsschritte gemäss Kapitel II. durchgeführt.
2. Die erfassten Messdaten werden dann in einem CAD-System so aufbereitet, dass die Fuss- und Kopfgeometrie der alten Serviceschaufel entsteht.
3. Danach erfolgt dann eine Überarbeitung der Fuss- und Kopfgeometrie der alten Serviceschaufel mit dem Ziel, alle Verschleisssegmente dieser Partien zu eliminieren. Es entsteht so die Endgeometrie der Fuss- und Kopfgeometrie.
4. Mittels der Endgeometrie der Fusspartie wird ein NC-Programm zur Herstellung von Spannbacken zum Spannen dieser Fusspartie erzeugt.
5. Mittels des Programms wird im ersten Schritt ein Satz Spannbacken 27 auf der A-Achsen-Spanneinheit hergestellt, mit dem die Fusspartie der zu fertigenden Serviceschaufel definiert in der A-Achsen-Spanneinheit aufgenommen werden kann.
6. Die Serviceschaufel wird in dieser A-Achsenspanneinheit gespannt.
7. Die alte Serviceschaufelgeometrie (Restkonturen der Schaufel) wird, wie in Kapitel II.2 bis II.7 beschrieben, ermittelt und aufbereitet.
8. Danach werden die benötigten NC-Fräs- und Messprogramme (Pos. II. 10. 1. bis II. 10.4 ) für die neue Serviceschaufel erstellt.
9. Fertigungsablauf zur Erstellung der Hilfsspannflächen
   9.1 Unter Zuhilfenahme des unter Pos. II.1-4 erzeugten NC-Programms werden die Hilfsspannflächen der Parallelbackenspannfutter für die Aufnahme der Fussgeometrie hergestellt.
   9.2 Die Hilfsspannbacken werden dann in die dementsprechenden Spannadapter der A-Achse montiert und ihre Position vermessen.
10. Fertigungsablauf zur Herstellung einer neuen Serviceschaufel
11. Es wird in die W-Achsenspanneinheit 16 ein Rohling 38 eingespannt (Fig. 17).
12. Mittels des in Pos. II.10.4 erstellten NC-Fräsprogramms wird die komplette Fussgeometrie plus eine Wendespannfläche hergestellt (Fig. 18).
13. Mittels des in Pos. II.10.2 erstellten NC-Messprogramms wird die hergestellte Fussgeometrie vermessen.
14. Wenn nicht gemäss Spezifikation: - NC-Fräsprogrammoptimierung -
15. Wenn gemäss Spezifikation: wird mittels des Kipphandlingsystems, das mit zwei Greiferzangen ausgestattet ist, die die Rohschaufel in den Wendespannflächen greift und klemmt, die Rohschaufel aus der W-Achsenspanneinheit 16 durch Kippen und gegebenenfalls durch die NC-Achsenbewegung (U/V) entnommen und zum Spannadapter in die A-Achse 7 transportiert (Fig. 19). Diese Operation kann auch durch ein externes Handlingsystem oder manuell erfolgen.
16. Nach dem Spannen der Rohschaufel im A-Achsen-Spannadapter wird mittels der Frässpindel am Ende der Rohschaufel entweder eine Zentrierung (für Reitstocksysteme) oder ein Spannzylinder (Reitstockspannzange) angebracht (Bohren oder Fräsen).
17. Die Reitstockspitze oder -zange wird mittels den U/V-Achsen in Position gebracht und die Rohschaufel so zwischen den A-Achsen-Spannadapter und der Reitstockspindel zentriert und gespannt.
18. Die so fixierte Rohschaufel wird dann mit dem in Pos. II.10.4 erstellten NC-Programm die Blattkonturen inkl. aller zugänglichen Kopfkonturen fertig bearbeitet. Vgl. dazu Fig. 20.
19. Danach wird die Reitstockspitze 11 zurückgezogen, der Reitstock 10 selbst in eine neutrale Position gestellt. Hierdurch ist die restliche Kopfkontur für die Frässpindel 32 frei zugänglich (vgl. Fig. 21) .
20. Die restliche Kopfkontur wird mittels einem in Pos. II.10.4 erstellen Teilprogramm fertig gestellt.
21. Im Anschluss wird die komplette Blatt- und Kopfkontur mit dem in Pos. II.10.3 erstellten Messprogramm vermessen (vgl. Fig. 22).
22. Hiernach wird ein komplettes Messprotokoll erstellt.
23. Bei Toleranzabweichungen werden automatisch durch die Integration eine Toleranzkreiskorrektur die dementsprechenden NC-Satzkomponenten korrigiert.
24. Danach wird die fertige Schaufel aus der A-Achsenspannung entnommen und ein neues Rohteil in die W-Achsenspannung eingelegt (per Roboter oder von Hand).

### III.2 Fertigungsablauf von längeren Serviceschaufeln

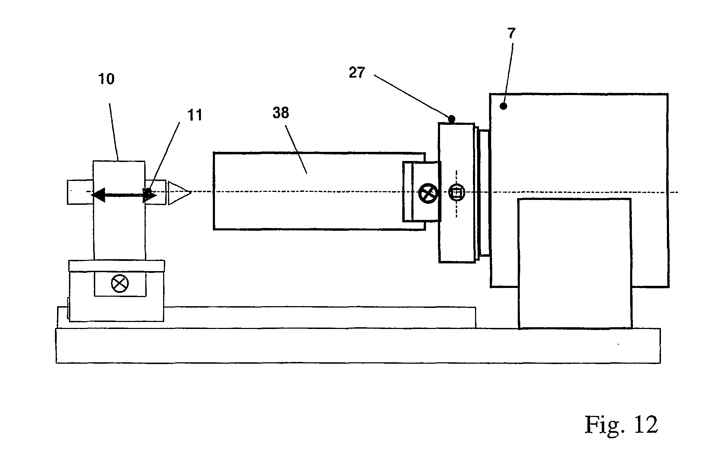

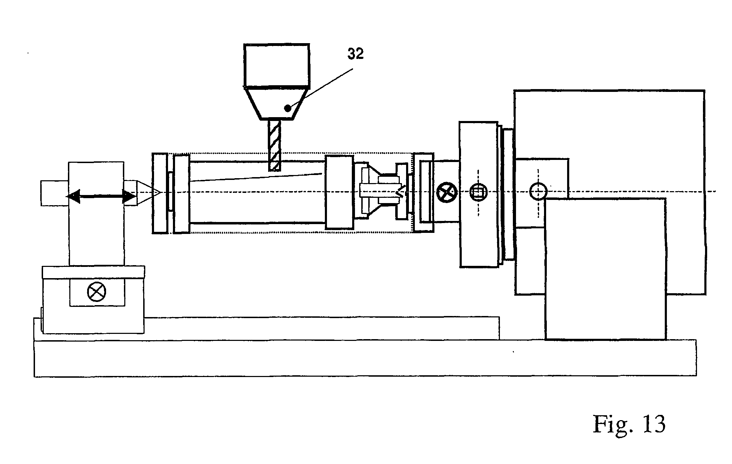

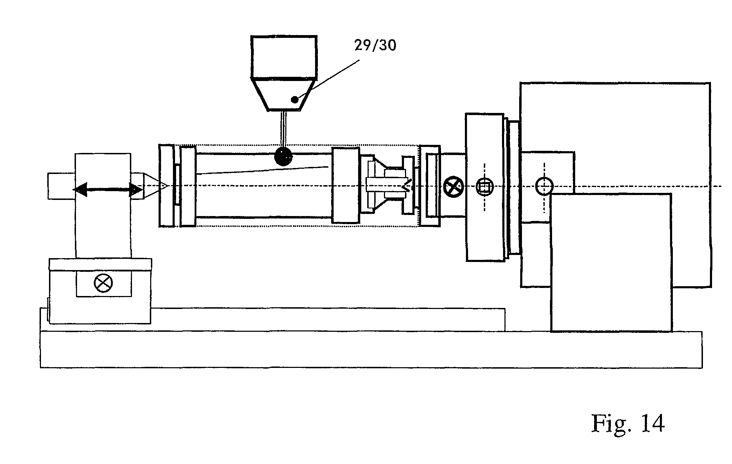

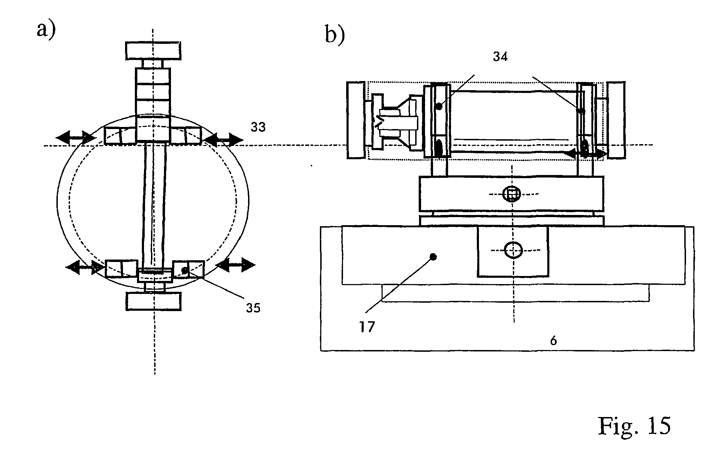

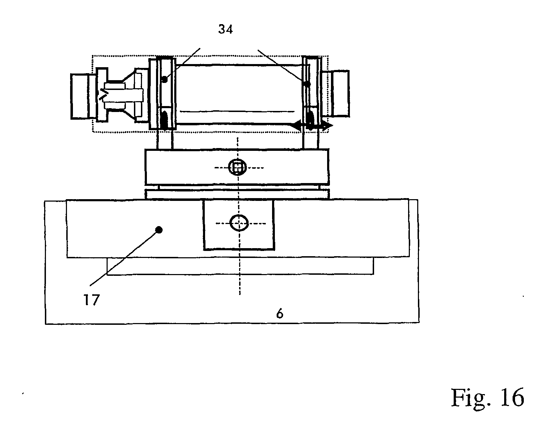

(geeignet für Schaufeln > 200 mm, vgl. dazu die Figuren 12-16)
1. Zur Ermittlung der alten Serviceschaufelgeometrie wird die Pos. II. durchgeführt.
2. Die erfassten Messdaten werden dann in einem CAD-System so aufbereitet, dass die Fuss- und Kopfgeometrie der alten Serviceschaufel entsteht.
3. Danach erfolgt dann eine Überarbeitung der Fuss- und Kopfgeometrie der alten Serviceschaufel mit dem Ziel, alle Verschleisssegmente dieser Partien zu eliminieren. Es entsteht so die Endgeometrie der Fuss- und Kopfgeometrie.
4. Mittels der Endgeometrie der Fusspartie wird ein NC-Programm zur Herstellung von Spannbacken zum Spannen dieser Fusspartie erzeugt.
5. Mittels des Programms wird im ersten Schritt ein Satz Spannbacken auf der A-Achsen-Spanneinheit hergestellt, mit dem die Fusspartie der zu fertigenden Serviceschaufel definiert in der A-Achsen-Spanneinheit aufgenommen werden kann.
6. Die Serviceschaufel wird in dieser A-Achsenspanneinheit gespannt.
7. Die alte Serviceschaufelgeometrie (Restkonturen der Schaufel) wird, wie in Pos. II.2 bis II.7 beschrieben, ermittelt und aufbereitet.
8. Danach werden die benötigten NC-Fräs- und Messprogramme (Pos. II.10.1. bis II.10.4) für die neue Serviceschaufel erstellt.
9. Fertigungsablauf zur Herstellung einer neuen Serviceschaufel.
10. In den A-Spannadapter werden Parallelspannbacken montiert, mit denen der Rechteckrohling oder das Guss-Schaufelende gespannt werden können .
11. Es wird in die A-Achsenspanneinheit 7 ein Rohling 38 eingespannt (vgl. Fig. 12) .
12. Im ersten Schritt wird dann mittels der Frässpindel am Ende der Rohschaufel entweder eine Zentrierung (für Reitstocksysteme) oder ein Spannzylinder (Reitstockspannzange) angebracht (Bohren oder Fräsen).
13. Die Reitstockspitze oder -zange wird mittels den U/V-Achsen in Position gebracht und die Rohschaufel so zwischen den A-Achsen-Spannadapter und der Reitstockspindel zentriert und gespannt.
14. Mit dem in Pos. II.10.4 erstellten NC-Fräsprogramm wird die komplette Schaufelgeometrie ausser der nicht zugängigen Fuss und Kopfendkonturen hergestellt. Zusätzlich werden zwei Kerbschnitte an Fuss- und Kopfende angefräst. Vgl. dazu Fig. 13.
15. Mittels des in Pos. II. 10.2 erstellten NC-Messprogramms wird die hergestellte Schaufelgeometrie vermessen (Fig. 14).
16. Wenn nicht gemäss Spezifikation: - NC-Fräsprogrammoptimierung -
17. Wenn gemäss Spezifikation: wird mittels des Kipphandlingsystems, das mit zwei Greiferzangen ausgestattet ist, die die Rohschaufel I in den Wendespannflächen greift und klemmt, die Schaufel aus der W-Achsenspanneinheit 17 durch Kippen und gegebenenfalls durch die NC-Achsenbewegung (U/V) entnommen und zum Rhombusspannadapter in die W-Achse 17 transportiert. Diese Operation kann auch durch ein externes Handlingsystem oder manuell erfolgen (Fig. 15).
18. Nach dem Spannen der Schaufel im Rhombusspannadapter auf der W-Achse 17 werden die bisher nicht zugänglichen Fuss- und Kopfpartien fertiggestellt und anschliessend vermessen (Fig. 16) .
19. Hiernach wird ein komplettes Messprotokoll erstellt.
20. Bei Toleranzabweichungen werden automatisch durch die Integration eine Toleranzkreiskorrektur die dementsprechenden NC-Satzkomponenten korrigiert.
21. Danach wird die fertige Schaufel aus dem W-Rhombusspannadapter entnommen und ein neues Rohteil in die A-Achsenspannung eingelegt (per Roboter oder von Hand)

Das neue Konzept lässt zu, dass man auf ein und der selben Maschine die Serviceschaufeldaten ermittelt, dann im CAD-CAM-System in beispielsweise CATIA-Format bearbeitet, inkl. einer Strömungsoptimierungsberechnung, und auf der gleichen Maschine diese neue Serviceschaufel mittels allen verfügbaren neuen optimierten Schaufelfertigungstechnologien in kürzester Zeit und zu niedrigsten Kosten herstellt. (Heli Frästechnologie etc.). Des weiteren wird die komplette Datendokumentation automatisch im System erstellt.

### Vergleich:

| Serviceschaufel-Geometriedaten-Ermittlung | | |
|---|---|---|
| Alt: | über Messmaschine und manuell | ca. 24 h |
| Neu: | im System | ca. 1-2 h |

| NC-Fräsprogrammerstellung | | |
|---|---|---|
| Alt: | manuelle Eingabe der Daten ins CAD-System | ca. 3 Tage |
| | Oder manuelle Programmierung | ca. 5 Tage |
| Neu: | im System | ca. 0,5 h |

| NC-Messprogrammerstellung | | |
|---|---|---|
| Alt: | nur manuelle auf Messmaschine möglich | ca. 5 h. |
| | Die Schaufeln müssen alle per Hand | |
| | vermessen werden | ca. 2 h/Part |
| Neu: | im System | ca. 0,5 h |

| Strömungsoptimierungsberechnung | |
|---|---|
| Alt: nicht möglich | |
| Neu: im System | ca. 3 h |

| Schaufelherstellungszeit | | |
|---|---|---|
| Alt: | Gesplittete alte Technologien Nur bedingt mittels NC-Technologie | ca. 8 h/Part |
| Neu: | im System | ca. 0,5 h/Part |

| Auftragsdurchlaufzeit für 150 Schaufeln | |
|---|---|
| Alt: | 14 - 18 Wochen |
| Neu: im Servicesystem auf Singlemaschinen | 4 - 7 Tage |
| Auf einer speziellen Zelle (möglich, wenn gleiche Daten) | 2 - 3 Tage |

### BEZUGSZEICHENLISTE

- 1: X-Achsenschlitten
- 2: Y-Achsenschlitten
- 3: Z-Achsenschlitten
- 4: Spindeldrehachse
- 5: Maschinenbett
- 6: Maschinentisch
- 7: A-Achse ; NC-Rotationsachse
- 8: A-Achse; Spannadapter
- 9: Spannadapter-Austauschbacken
- 10: Reitstock
- 11: Reitstockspitze oder -zange
- 12: U-Achse-Reitstock
- 13: V-Achse-Reitstock
- 14: Kipphandlingsystem
- 15: Spannadapter-Austauschbacken
- 16: W-Achse Spannadapter
- 17: W-Achse
- 18-20: verschiedene Positionen der Reitstockspitze
- 21: Drei oder vier Innengewindebohrungen
- 22: Spindelaufnahme HSK 80 mit 100 mm Flanschdurchmesser;drei oder vier Innengewindebohrungen
- 23: Grosse Spannplatte zur Aufnahme von grossen Sonderspann-Elementen für grosse Schaufeln
- 24: Drei oder vier Schrauben für die Spannplattenverschraubung an der Spindelnase
- 25: Grosse Sonderspann-Elemente für grosse Schaufeln
- 26: Kurzzylinder zum Fixieren der grossen Spannplatte
- 27: Sonderspannadapter
- 28: zu vermessende Serviceschaufel
- 29: Messtaster
- 30: Streifenscanner
- 31: 3 x 120° gedreht, etc.
- 32: Frässpindel mit Werkzeug
- 33: Klemmhub
- 34: Definierte Spannflächen
- 35: auswechselbare Spannbacken
- 36: Parallelspannbacken
- 37: Fusspartie der Serviceschaufel
- 38: Rohling

## Patentansprüche

1. Verfahren zur Rundum-Bearbeitung eines Rohlings (38) mit einer einzigen Bearbeitungsmaschine wie beispielsweise einer Fräsmaschine, wobei die Rundum-Bearbeitung nach Massgabe einer dreidimensionalen Vorlage (28) geschieht
**dadurch gekennzeichnet, dass**
in einem ersten Schritt die Raumform und gegebenenfalls zudem die Oberflächenbeschaffung der dreidimensionalen Vorlage (28) automatisch vermessen wird, und die zugehörigen Daten abgespeichert werden, wobei diese Vorlage (28) in einer A-Achse (7) an deren Enden eingespannt wird, und wobei die Vorlage (28) in einem zweiten Schritt der Vermessung in ihrem mittleren Bereich über Spannadapter (15) gefasst wird, und Kopf- sowie Fussbereich der Vorlage in dieser Spannlage vermessen werden,
vor der Bearbeitung des Rohlings (38) unter Verwendung der genannten Daten, in einer numerischen Steuerung durch die Bearbeitungsmaschine Spannbacken zum Spannen des teilbearbeiteten Rohlings in wenigstens einem Spannadapter (27, 35) im ersten, endgültig bearbeiteten Bereich hergestellt werden,
in einem zweiten Schritt ein Rohling (38) von wenigstens einem Spannadapter (27, 35) gehalten wird und von der Bearbeitungsmaschine respektive der Fräsmaschine unter Verwendung der genannten Daten zur numerischen Steuerung ein erster Bereich in seine endgültige, der bestimmungsgemässen Verwendung entsprechende Teilform gebracht wird, und
in einem dritten Schritt der teilbearbeitete Rohling von wenigstens einem Spannadapter (27, 35) im ersten, endgültig bearbeiteten Bereich gehalten wird und der übrige Bereich von derselben, Bearbeitungsmaschine respektive Fräsmaschine unter Verwendung der genannten Daten zur numerischen Steuerung in seine endgültige, der bestimmungsgemässen Verwendung entsprechende Gesamtform gebracht wird.

2. Verfahren nach Anspruch 1, **dadurch gekennzeichnet, dass** die Daten nach deren Erfassung und vor deren Verwendung zur Rundum-Bearbeitung des Rohlings (38) derart verändert werden, dass die dreidimensionale Raumform und gegebenenfalls zudem die Oberflächenbeschaffung der Vorlage (28) entweder optimiert wird, oder wieder auf einen ursprünglichen Zustand der dreidimensionalen Vorlage (28) gebracht wird, indem beispielsweise Verschleisssegmente eliminiert werden.

3. Verfahren nach einem der vorhergehenden Ansprüche, **dadurch gekennzeichnet, dass** sämtliche Arbeitsschritte des Verfahrens auf einer einzigen Bearbeitungsmaschine respektive Fräsmaschine durchgeführt werden, wobei es sich bei der Bearbeitungsmaschine respektive Fräsmaschine um eine 4-Achsen Tischmaschine mit zusätzlichen ersten Mitteln (7, 10, 17) zur Halterung eines Rohlings (38) in zwei Aufspannungen und mit zweiten Mitteln (29, 30) zur Vermessung der Raumform und gegebenenfalls der Oberflächenbeschaffung einer Vorlage (28) oder des zu bearbeitenden oder bearbeiteten Werkstücks handelt.

4. Verfahren nach einem der vorhergehenden Ansprüche, **dadurch gekennzeichnet, dass** es sich bei der Vorlage (28) um ein zu ersetzendes Bauteil handelt, insbesondere um ein zu ersetzendes Bauteil einer Gasturbine oder Dampfturbine wie beispielsweise eine Laufschaufel oder Leitschaufel.

5. Verfahren nach Anspruch 2, **dadurch gekennzeichnet, dass** vor der Bearbeitung des Rohlings (38) unter Verwendung der genannten veränderten Daten in einer numerischen Steuerung durch die Bearbeitungsmaschine Spannbacken zum Spannen des teilbearbeiteten Rohlings in wenigstens einem Spannadapter (27, 35) im ersten, endgültig bearbeiteten Bereich hergestellt worden.

6. Verfahren nach einem der vorhergehenden Ansprüche, **dadurch gekennzeichnet, dass** im ersten Schritt die Raumform und gegebenenfalls zudem die Oberflächenbeschaffung der dreidimensionalen Vorlage (28) automatisch unter Verwendung eines Messtasters (29) und/oder eines Streifenscanners (30) durchgeführt wird.

7. Verfahren nach einem der vorhergehenden Ansprüche, **dadurch gekennzeichnet, dass** im ersten Schritt zur Vermessung der Raumform und gegebenenfalls zudem der Oberflächenbeschaffung der dreidimensionalen Vorlage (28) die Vermessung mehrstufig unter Verwendung von unterschiedlichen Rotationspositionen dieser A-Achse (7) durchgeführt wird.

8. Verfahren nach einem der vorhergehenden Ansprüche, **dadurch gekennzeichnet, dass** es sich bei der Vorlage (28) um eine zu ersetzende Laufschaufel oder Leitschaufel einer Gasturbine oder Dampfturbine handelt mit einer Länge im Bereich von mehr als 200mm,
dass im zweiten Schritt ein Rohling (38) in einer A-Achse (7) eines Maschinentisches (6) gefasst wird, indem an wenigstens einem Ende der Rohling (38) über einen Sonderspannadapter (27) gefasst wird und am anderen Ende über einen verfahrbaren Reitstock (10) fixiert wird,
dass anschliessend der mittlere Bereich des Rohlings (38) in seine endgültige, der bestimmungsgemässen Verwendung entsprechende Teilform gebracht wird,
dass im dritten Schritt der teilbearbeitete Rohling durch gegebenenfalls eigens für die spezifische Schaufel hergestellte Spannbacken (35) an definierten Spannflächen (34) in einer W-Achse (17) des Maschinetisches (6) gefasst wird,
und dass anschliessend Kopf- sowie Fussbereich in ihre endgültige, der bestimmungsgemässen Verwendung entsprechende Teilform gebracht werden.

9. Verfahren nach einem der Ansprüche 1 bis 7, **dadurch gekennzeichnet, dass** es sich bei der Vorlage (28) um eine zu ersetzende Laufschaufel oder Leitschaufel einer Gasturbine oder Dampfturbine handelt mit einer Länge im Bereich von weniger als 200 mm,
dass im zweiten Schritt der Rohling (38) durch Spannbacken (35) in einer W-Achse (17) des Maschinentisches (6) gefasst wird, und dass anschliessend wenigstens ein Kopf- oder Fussbereich in seine endgültige, der bestimmungsgemässen. Verwendung entsprechende Teilform gebracht wird,
dass im dritten Schritt der teilbearbeitete Rohling in einer A-Achse (7) eines Maschinentisches (6) gefasst wird, indem an wenigstens einem bereits in seine endgültige, der bestimmungsgemässen Verwendung entsprechende Teilform gebrachten Ende der Rohling über einen gegebenenfalls eigens für die spezifische Schaufel hergestellten Sonderspannadapter (27) gefasst wird und optional am anderen Ende über einen verfahrbaren Reitstock (10) fixiert wird,
und dass anschliessend der mittlere Bereich sowie gegebenenfalls der verbleibende Kopf- oder Fussbereich in ihre endgültige, der bestimmungsgemässen Verwendung entsprechende Teilform gebracht werden.

## Claims

1. Process for machining a blank (38) from all directions with a single machine tool, such as for example a milling machine, the machining from all directions being based on a three-dimensional template (28),
**characterized in that**
in a first step, the three-dimensional form and, if need be, also the surface finish of the three-dimensional template (28) is automatically measured, and the associated data are saved, this template (28) being restrained at its ends in an A axis (7), and, in a second step of the measurement, the template (28) being grasped in its central region by means of clamping adapters (15), and the tip and root regions of the template being measured in this clamped position,
before the machining of the blank (38) using said data, clamping jaws for clamping the partially machined blank in at least one clamping adapter (27, 35) in the first, finally machined region are manufactured in a numerical control by the machine tool,
in a second step, a blank (38) is held by at least one clamping adapter (27, 35) and a first region is brought into its final, ready to use partial form by the machine tool or the milling machine using said data for numerical control, and
in a third step, the partially machined blank is held by at least one clamping adapter (27, 35) in the first, finally machined region and the remaining region is brought into its final, ready to use overall form by the same machine tool or milling machine, using said data for numerical control.

2. Process according to Claim 1, **characterized in that**, after they have been acquired and before they are used for machining the blank (38) from all directions, the data are changed in such a way that the three-dimensional spatial form and, if need be, also the surface finish of the template (28) are either optimized or brought again to an original state of the three-dimensional template (28), **in that** for example worn segments are eliminated.

3. Process according to one of the preceding claims, **characterized in that** all the working steps of the process are carried out on a single machine tool or milling machine, the machine tool or milling machine being a 4-axis bench-type machine with additional first means (7, 10, 17) for mounting the blank (38) in two chucking setups and with second means (29, 30) for measuring the three-dimensional form and, if need be, the surface finish of a template (28) or of the workpiece that is to be machined or has been machined.

4. Process according to one of the preceding claims, **characterized in that** the template (28) is a component that is to be replaced, in particular a component to be replaced of a gas turbine or steam turbine, such as for example a moving blade or stationary blade.

5. Process according to Claim 2, **characterized in that**, before the machining of the blank (38) using said changed data, clamping jaws for clamping the partially machined blank in at least one clamping adapter (27, 35) in the first, finally machined region are manufactured in a numerical control by the machine tool.

6. Process according to one of the preceding claims, **characterized in that**, in the first step, the three-dimensional form and, if need be, also the surface finish of the three-dimensional template (28) are carried out automatically by using a measuring probe (29) and/or slit scanner (30).

7. Process according to one of the preceding claims, **characterized in that**, in the first step, for measuring the three-dimensional form and, if need be, also the surface finish of the three-dimensional template (28), the measurement is carried out in multiple stages using different rotational positions of this A axis (7).

8. Process according to one of the preceding claims, **characterized in that** the template (28) is a moving blade or stationary blade that is to be replaced of a gas turbine or steam turbine with a length in the range of more than 200 mm,
**in that**, in the second step, a blank (38) is grasped in an A axis (7) of a machine bench (6), **in that** the blank (38) is grasped at at least one end by means of a special clamping adapter (27) and is fixed at the other end by means of a movable tailstock (10),
**in that** subsequently the central region of the blank (38) is brought into its final, ready to use partial form,
**in that**, in the third step, the partially machined blank is grasped on defined clamping surfaces (34) in a W axis (17) of the machine bench (6) by clamping jaws (35), if need be specifically manufactured for the specific blade, and
**in that** subsequently the tip and root regions are brought into their final, ready to use partial form.

9. Process according to one of claims 1 to 7, **characterized in that** the template (28) is a moving blade or stationary blade that is to be replaced of a gas turbine or steam turbine with a length in the range of less than 200 mm,
**in that**, in the second step, the blank (38) is grasped by clamping jaws (35) in a W axis (17) of the machine bench (6), and **in that** subsequently at least a tip or root region is brought into its final, ready to use partial form,
**in that**, in the third step, the partially machined blank is grasped in an A axis (7) of a machine bench (6), **in that** the blank is grasped at at least one end that has already been brought into its final, ready to use partial form by means of a special clamping adapter (27), if need be specifically manufactured for the specific blade, and optionally fixed at the other end by means of a movable tailstock (10),
and **in that** subsequently the central region and, if need be, the remaining tip or root region is brought into its/their final, ready to use partial form.

## Revendications

1. Procédé pour l'usinage circulaire d'une ébauche (38) avec une machine d'usinage unique telle qu'une fraiseuse, l'usinage circulaire s'effectuant en fonction d'un modèle tridimensionnel (28),
**caractérisé en ce que**
dans une première étape, la forme spatiale et éventuellement en outre la structure de surface du modèle tridimensionnel (28) sont mesurées automatiquement, et les données associées sont mémorisées, ce modèle (28) étant serré au niveau de ses extrémités dans un axe A (7), et le modèle (28) étant saisi dans une deuxième étape de la mesure dans sa région centrale par le biais d'adaptateurs de serrage (15), et la région de la tête ainsi que de la base du modèle étant mesurée dans cette position serrée,
avant l'usinage de l'ébauche (38), en utilisant lesdites données, on crée, dans une commande numérique par la machine d'usinage, des mâchoires de serrage pour serrer l'ébauche partiellement usinée dans au moins un adaptateur de serrage (27, 35) dans la première région usinée définitivement,
dans une deuxième étape, une ébauche (38) est maintenue par au moins un adaptateur de serrage (27, 35) et une première région est amenée à sa forme partielle finale correspondant à l'utilisation visée, par la machine d'usinage, respectivement la fraiseuse, en utilisant lesdites données de commande numérique, et
dans une troisième étape, l'ébauche partiellement usinée est maintenue par au moins un adaptateur de serrage (27, 35) dans la première région usinée définitivement et la région restante est alors amenée par la même machine d'usinage ou fraiseuse, en utilisant lesdites données de commande numérique, à sa forme complète finale correspondant à l'utilisation visée.

2. Procédé selon la revendication 1, **caractérisé en ce que** les données sont modifiées après leur saisie et avant leur utilisation pour l'usinage circulaire de l'ébauche (38), de telle sorte que la forme spatiale tridimensionnelle et éventuellement aussi la structure de surface du modèle (28) puissent être soit optimisées soit à nouveau amenées à un état initial de modèle tridimensionnel (28), par exemple en éliminant les sections d'usure.

3. Procédé selon l'une quelconque des revendications précédentes, **caractérisé en ce que** toutes les étapes de travail du procédé sont effectuées sur une seule machine d'usinage ou fraiseuse, la machine d'usinage ou fraiseuse étant de préférence une machine sur table à 4 axes avec des premiers moyens supplémentaires (7, 10, 17) pour fixer une ébauche (38) dans deux serrages et avec des deuxièmes moyens (29, 30) pour mesurer la forme spatiale et éventuellement la structure de surface d'un modèle (28) ou de la pièce à usiner ou usinée.

4. Procédé selon l'une quelconque des revendications précédentes, **caractérisé en ce que** le modèle (28) est un composant à remplacer, notamment un composant à remplacer d'une turbine à gaz ou d'une turbine à vapeur comme par exemple une aube mobile ou une aube directrice.

5. Procédé selon la revendication 2, **caractérisé en ce que**, avant l'usinage de l'ébauche (38), en utilisant lesdites données modifiées, on crée, dans une commande numérique par la machine d'usinage, des mâchoires de serrage pour serrer l'ébauche partiellement usinée dans au moins un adaptateur de serrage (27, 35) dans la première région usinée définitivement.

6. Procédé selon l'une quelconque des revendications précédentes, **caractérisé en ce que** dans la première étape, la détermination de la forme spatiale et éventuellement de la structure de surface du modèle tridimensionnel (28) sont effectuées automatiquement en utilisant un palpeur de mesure (29) et/ou un scanner à bande (30).

7. Procédé selon l'une quelconque des revendications précédentes, **caractérisé en ce que** dans la première étape pour la mesure de la forme spatiale et éventuellement de la structure de surface du modèle tridimensionnel (28), la mesure est effectuée en plusieurs étapes en utilisant différentes positions de rotation de cet axe A (7).

8. Procédé selon l'une quelconque des revendications précédentes, **caractérisé en ce que** le modèle (28) est une aube mobile ou une aube directrice à remplacer sur une turbine à gaz ou à vapeur, ayant une longueur de l'ordre de plus de 200 mm,
**en ce que** dans la deuxième étape, une ébauche (38) est saisie dans un axe A (7) d'une table de machine (6), en saisissant l'ébauche (38) au moins à une extrémité par le biais d'un adaptateur de serrage séparé (27) et en la fixant à l'autre extrémité par le biais d'une contre-poupée mobile (10),
**en ce qu'**ensuite, la région centrale de l'ébauche (38) est amenée à sa forme partielle finale correspondant à l'utilisation visée,
**en ce que** dans la troisième étape, l'ébauche partiellement usinée est saisie par des mâchoires de serrage (35) fabriquées pour l'aube spécifique, au niveau de surfaces de serrage définies (34) dans un axe W (17) de la table de la machine (6),
et **en ce qu'**ensuite les régions de tête et de base sont amenées à leur forme partielle définitive correspondant à l'utilisation visée.

9. Procédé selon l'une quelconque des revendications 1 à 7, **caractérisé en ce que** le modèle (28) est une aube mobile ou directrice à remplacer d'une turbine à gaz ou à vapeur ayant une longueur de l'ordre de moins de 200 mm,
**en ce que** dans la deuxième étape, l'ébauche (38) est saisie par des mâchoires de serrage (35) dans un axe W (17) de la table de la machine (6), et **en ce qu'**ensuite au moins une région de tête ou de base est amenée à leur forme partielle définitive correspondant à l'utilisation visée,
**en ce que** dans la troisième étape, l'ébauche partiellement usinée est saisie dans un axe A (7) d'une table de machine (6), en saisissant l'ébauche au moins à une extrémité déjà amenée à sa forme partielle correspondant à son utilisation finale visée, par le biais d'un adaptateur de serrage séparé (27) éventuellement fabriqué spécialement pour l'aube spécifique et en la fixant en option à l' autre extrémité par le biais d'une contre-poupée mobile (10),
et **en ce qu'**ensuite, la région centrale ainsi qu'éventuellement la région de tête ou de base restante sont amenées à leur forme partielle finale correspondant à l'utilisation visée.
